# EUROPEAN PATENT SPECIFICATION

(11) **EP 2 269 453 B1**
(45) Date of publication and mention of the grant of the patent: **07.05.2014**
(21) Application number: 09722410.9
(22) Date of filing: 17.03.2009
(51) Int. Cl.: A01N 31/06, A01N 65/20, A01P 13/02

(54) **A METHOD FOR CONTROLLING WEEDS IN VEGETABLE CROPS**
VERFAHREN FÜR DIE BEKÄMPFUNG VON UNKRÄUTERN IN GEMÜSEKULTUREN
PROCÉDÉ DE LUTTE CONTRE LES PLANTES NUISIBLES DANS DES CULTURES VÉGÉTALES

(30) Priority: 17.03.2008 AR P080101113
(43) Date of publication of application: 05.01.2011
(73) Proprietor: Gutierrez Méndez, Miguel Ángel, 1069 Ciudad Autónoma de Buenos Aires (AR)
(72) Inventor: SOSA, Gustavo Marcelo, 2000 Rosario (Pcia. de Santa Fe) (AR); CARRILLO, Nestor, 2025 Villa Gobernador Gálvez (Pcia. de Santa Fe) (AR); CECCARELLI, Eduardo Augusto, 2000 Rosario (Pcia. de Santa Fe) (AR); USEGLIO, Mariana, 1416 Ciudad Autónoma de Buenos Aires (AR); LAGORIO, Sebastián Horacio, 2900 San Nicolás (Pcia. de Buenos Aires) (AR)
(74) Representative: Elzaburu Marquez, Alberto
(86) International application number: PCT/ES2009/070065
(87) International publication number: WO 2009/115632

(56) References cited:
- EP-A1- 0 393 923
- R. CHAUBAL ET AL: "Larvicidal Activity of Acacia nilotica Extracts and Isolation of D-Pinitol - A Bioactive Carbohyrate", CHEMISTRY & BIODIVERSITY, vol. 2, 1 January 2005 (2005-01-01), pages 684-688, XP55044481, ISSN: 1612-1880
- PHILLIPS D V ET AL: "CYCLITOLS IN SOYBEAN", JOURNAL OF AGRICULTURAL AND FOOD CHEMISTRY, AMERICAN CHEMICAL SOCIETY, US, vol. 30, no. 3, 1 January 1982 (1982-01-01), pages 456-458, XP000577153, ISSN: 0021-8561, DOI: 10.1021/JF00111A011
- Kelly A. Cook and Rick Weinzierl: "Corn Earworm (Helicoverpa zea)", University of Illinois, Department of Crop Sciences , 2004, XP002687409, Retrieved from the Internet: URL:http://ipm.illinois.edu/fieldcrops/ins ects/corn_earworm.pdf [retrieved on 2012-11-15]
- REESE J C ET AL: "Effects of cotton condensed tannin, maysin (Corn) and pinitol (soybeans) onHeliothis zea growth and development", JOURNAL OF CHEMICAL ECOLOGY, PLENUM PUBLISHING CORPORATION, US, vol. 8, no. 12, 1 January 1982 (1982-01-01), pages 1429-1436, XP008133081, ISSN: 0098-0331, DOI: 10.1007/BF00989100
- DREYER D L ET AL: "Pinitol, a larval growth inhibitor for Heliothis zea in soybeans", EXPERIENTIA, BIRKHAEUSER VERLAG. BASEL, CH, vol. 35, no. 9, 1 January 1979 (1979-01-01), pages 1182-1183, XP008103577, ISSN: 0014-4754
- REESE J.C. ET AL.: 'Effects of cotton condensed tannin, maysin (corn) and pinitol (soybeans) on Heliothis zea growth and development' JOURNAL OF CHEMICAL ECOLOGY vol. 8, no. 12, 1982, pages 1429 - 1436, XP008133081
- DREYER D.L. ET AL.: 'Pinitol, a larval growth inhibitor for Heliothis zea in soybeans' EXPERIENTIA vol. 35, 1979, pages 1182 - 1183, XP008103577

## Description

### FIELD OF THE INVENTION

The present invention relates to a method for controlling weeds in vegetable crops by means of the use of a composition containing D-pinitol, and more particularly, a method for obtaining and applying a composition containing D-pinitol intended for use in crops which are generally resistant to such composition.

### BACKGROUND OF THE INVENTION

As it is well known by those skilled in the art, herbicides are allies well suited to large-scale production, and single crops are essential to support the current food industry. Due to the use of certain agrochemicals and in particular, of herbicides, there have been reports of cases of poisoning about which numerous articles have been published and broadly disseminated in different media, both mass and specialized media. The toxicity of the products was measured and tested, for example, in birds, skin, gastric cancer cases due to 2.4D, among others.

Moreover, it is worth noting that a different strategy of intensive crop farming arose thanks to the methodology of direct sowing, for example, Monsanto's genetically modified soybean and with the use of glyphosate, with the conventional moldboard plough no longer being used and the soil being protected with the material separated from the harvested grain crops. Glyphosate is a non-selective herbicide with side effects on health. The herbicide becomes selective if it is associated in the crop to the soybean-resistant variety. This combination of products led to a monopoly of the resistant soybean variety, i.e. single crop farming, as a result of the lower cost of production.

Glyphosate is a synthetic molecule that degrades in the soil. However, in large quantities, glyphosate contaminates the soil and generates herbicide resistant weeds. The use of a GM-organism (GMO) generates resistance among some consumers and markets. Whether GM-soybean (or Monsanto's roundup ready (RR) soybean) will have a secondary effect on the environment and human health is still to be determined. Initially, such effect, if any, is negligible. The low production cost of using both products, namely, RR soybean and glyphosate, compared to non-GM soybean is the key of the success. Yet, it would be important to obtain similar products that are non-GM soybean, or else to obtain a more "environmentally-friendly" herbicide. Thus the possibility of finding the crop limits in terms of more environmentally-harmonious products that are nonetheless intensive crops poses a great challenge to researchers. The search for elements capable of treating the environment with better products, and which also do not affect the health, is one of the top priorities in the research on allelochemicals and byproducts of plant metabolism.

The development generally known as "organic products" caught the interest of a very important number of consumers around the world who are willing to pay an extra price to get products with enhanced benefits for their health and for the protection of the environment. Thus, less intensive but healthier and more natural crops were developed. An organic food product certification is a major issue in the developed world. However, the growth of organic and intensive crop framing still appears to be a difficult-to-attain goal, as they are to a certain extent contradictory because it has not yet been possible to obtain large quantities of agricultural products using "organic-type" herbicides.

D-pinitol is known to be an insect growth inhibitor for the arthropod currently known as *Helicoverpa zea*, formerly also known as *Heliothis zea*.

As Kelly A. Cook and Rick Weinzierl disclose in "Corn Earworm (Helicoverpa zea)", (University of Illinois, Department of Crop Sciences, 2004, available in Internet at the URL:http://ipm.illinois.edu/fieldcrops/insects/corn:earwrm.pdf), *Helicoverpa zea*, the corn earworm, is an important pest in vegetable crops, including soybeans, green beans, etc.

Both Reese et al. ("Effects of cotton condensed tannin, maysin (Corn) and pinitol (soybeans) on Heliothis zea growth and development", Journal of Chemical Ecology, Plenum Publishing Corporation, US, vol. 8, no. 12, 1 January 1982, pages 1429-1436), and Dreyer D. et al. ("Pinitol, a larval growth inhibitor for Heliothis zea in soybeans", Experientia, Birkhaeuser Verlag, Basel, CH, vol. 35, no. 9, 1 January 1979, pages 1182-1183) disclose D-pinitol to be an effective larvicide against *Helicoverpa zea* (referring to it by its former denomination *Heliothis zea),* in vegetables crops such as soybeans. No evidence for any plant toxicity for D-pinitol is mentioned in said publications. The use of compositions with a defined concentration of D-pinitol, expressed as mass per unit volume (namely milligrams per milliliter), is also not mentioned by Reese et al. or Dreyer D. et al. No mention of the herbicidal activity of any compound can be found in any of said two documents, insect control being their matter of interest.

Certain 6-fluoroshikimic acid derivatives possessing herbicidal activity are disclosed in EP 0393923. D-pinitol is not mentioned.

The research disclosed herein casts some light in this regard: improving the quality of life, obtaining agricultural products by means of intensive and healthy crops for the environment and human health.

### SUMMARY OF THE INVENTION

The present invention specifically relates to a method for controlling weeds in vegetable crops, which comprises the use of a composition containing at least D-pinitol, and where the crop of agronomical interest is resistant to such composition, and where the concentration of D-pinitol in the composition applied in the field ranges from 0.20 mg/ml to 2300 mg/ml. The composition thus obtained is applied to vegetable crops which are usually resistant to D-pinitol by means of selected devices, including spraying devices, substance applicator devices in the form of granules, and substance applicator devices in the form of powder, as appropriate.

### DETAILED DESCRIPTION OF THE INVENTION

The method disclosed and developed in this invention for controlling weeds in vegetable crops uses a composition containing at least D-pinitol, and is preferably applied to vegetable crops which are generally resistant to such composition.

D-pinitol (3-O-methyl-chiro-inositol) is currently used as a dietary supplement for people, as claimed by its manufacturer, and also in insulin-resistant patients, and further aids the transport of glucose into the muscle cells, among other beneficial effects as an active molecule and far from being a contaminant.

The method of the invention developed for controlling weeds in vegetable crops designed for the purpose of obtaining and applying a composition to crops that are generally resistant to the action of such composition comprises the steps of:
i) preparing a composition that contains at least D-pinitol in an agronomically suitable medium, with a concentration of D-pinitol ranging from 0.20 mg/ml to 2300 mg/ml; and
ii) applying the composition obtained to vegetable crops that are generally resistant to D-pinitol by means of devices selected from spraying devices and solid-particle applicator devices in the form of granules, pellets, tablets or powder, as appropriate.

More specifically, it has been shown that the method of this invention is also effective for controlling weeds when the concentration of D-pinitol is within other ranges, such as between 80 mg/ml and 2000 mg/ml; between 30 mg/ml and 2000 mg/ml; or between 0.2 and 120 mg/ml. The agronomically suitable excipients are selected from the group that comprises pH regulators, detergents, preservatives and stabilizers.

For the application of the method disclosed in the present invention, the composition that contains D-pinitol may be in the form of slow-release granules, a liquid, a liquid concentrate, tablets and pellets. When the composition containing D-pinitol is in solid form, such as the abovementioned granules, tablets and pellets, the composition to be applied to the crops is produced by means of dissolving such solids in a liquid solution, said liquid solution is preferably applied when the seed is sown. Furthermore, the composition can be applied in the form of granules together with the seed for the slow release of the compound.

The agronomic species referred to above include, but are not limited to: soybean *(Glycine max),* corn (*Zea mays*), Wheat (Triticum sp.), *Phaseolus sp., Vigna sp., Crotalaria sp., Cajanus sp., Canavalia sp., Stizolobium sp., Tephrosia* sp., *Dolichos sp., Cassia sp.*, *Lotononis sp., Lab lab., Indigofera sp., Melilotus sp., Arachis sp., Aeschynomene sp., Centrosema sp., Macroptilium sp. Prosopis sp., Pueraria sp. Medicago sp., Lotus sp,* Gossypium sp. (cotton), *Solanum sp.* (potato), *Helianthus sp.* (sunflower), *Sorgohum sp.* (sorghum), *Brassica sp.* (rape), *Beta sp*. (tomato), *Dianthus sp.* (carnation) and *Rosa sp*. (Rose). Furthermore, the composition may contain excipients and other active ingredients that work in synergy or complement its action.

With regard to D-pinitol, it should be noted that it is a naturally occurring non-toxic compound produced by several plant species under "hydric stress". The studies submitted by the supplier of pinitol (New Zealand Pharmaceuticals) show that the product did not alter any of the parameters measured in male and female rats (the parameter is: acute toxicity) nor did it induce mutations in bacteria.

The degradation of pinitol in the soil is not described, which is estimated to be fast, since the bacteria associated with the root nodes of legumes such as *Bradyrizhobium sp.* use it as a source of carbon. The presence of such compound in the soil would be broken down at least by N-fixing microorganisms. In addition, as the molecule is so simple and similar to fructose, it is expected to have a very short life-period in the soil.

There is not much information available regarding the mechanism of action of D-pinitol as an inhibitor of the germination of some plant species. The critical and cardinal points of the germination process are completely inhibited by D-pinitol, since the radicle fails to emerge from the seed. Although the imbibition process takes place as a result of the physical properties of water that penetrates the seed coat, which triggers the biochemical processes, such processes are completely arrested.

It is likely that D-pinitol inhibits the synthesis and/or release of gibberellins (hormone GA) as this is an initial and general step of the germination process. It could be also inhibiting (concurrently in dicotyledonous plants) phytochrome action, thus producing an overall arrest of the biochemical processes of the germination. Likewise, it is likely that pinitol inhibits, directly or indirectly, the cell division and thus the germination. Species that manage to overcome D-pinitol would be doing so by means of a modification of the site of action of D-pinitol, (maybe a mutation) whether at a morphological or biochemical level or both. The inhibition suggested at the GA level would be an inhibition in the synthesis of GA or else, to the ability of GA to get to the site of action to trigger the germination process. A broader effect could be that the GA synthesis would take place but not the cell division, thus giving rise to an arrest of cell division and growth or germination.

The most relevant piece of information about D-pinitol as an active ingredient in a herbicide is its harmlessness to human health and the environment. The fact that a molecule with such characteristics can act as a herbicide makes this study relevant when it comes to finding new, natural products for an organic and safe agriculture for the environment, human consumption and intensive crop farming. Such characteristic of D-pinitol does not go against its roughness. The molecule was heat treated (by boiling the sample) for several minutes and did not lose its inhibiting capacity. The germination process was completely arrested in the study species, showing a high degree of inhibition. The concentration used was relatively low (300mM). This being the case, pinitol appears to be an ideal herbicide for both organic and intensive agriculture, as it is a product that has unique features given its selectivity in inhibiting the germination process.

Considering that the current growing of soybean utilizes glyphosate and the RR variety with its constraints and detrimental effect on the environment and potential damage to health, the method herein described offers a work model wherein soybean or corn or wheat no longer need to be genetically modified to apply a natural herbicide in an efficient agriculture system. In other words, D-pinitol used as inhibitor is a pathway to the development of new products with the same degree of inhibition and concern for the environment.
The molecule structure is providing a mirror where new molecules should mimic the effect and harmlessness of the product.

### Example 1: Obtaining D-pinitol extract

The research described herein began by obtaining plant material from different algarrobo *(Prosopis sp)* trees so as to then make the water extracts of various parts of the plant.
- The germination of lettuce seeds *(Lactuca sativa* var. Grand Rapids) was used as the method of detecting the allelochemical activity of the extract.
- The pods showed the highest inhibition. Thus, all subsequent assays were performed from this tree organ.
- Algarrobo tree leaves were collected in June 2005 in the North of the province of Santiago del Estero. The pods were collected that same year but in December after ripening, and were collected directly from the plant.
- After trying several grinding processes, the preferred choice was to grind the leaves in liquid nitrogen using a mortar and pestle. The ground leaves were then treated as described in each case.
- The pods, for their part, had to be chopped using scissors, without breaking the seeds inside. The chopped pods were processed as described in each case.
- The presence of allelochemicals was determined from the inhibition of the germination of lettuce seeds *(Lactura sativa* var. Grand rapids TBR, from Guasch 2006-2007 harvest, bach 2477). Petri dishes with filter paper were used for the germination containing 7ml for the big seeds and 5ml for the smaller seeds. In other cases, macro wells arranged in 12 wells were used, containing 600 or 800 µl of solution instead of Petri dishes.
- Each well contained a filter-paper disk. 48 hours after inducing the germination by imbibition, the germinated seeds were counted.

A seed with visible radicle to the naked eye was counted as germinated.
- The use of solvents for specific periods of time allowed concluding that the best extraction means was ethanol-water 90-10% and methanol 100% for 12 hours, as the preferred means for the subsequent purification by HPLC.
- After the extraction the solvent is evaporated in a vacuum centrifuge using a Speedvac Savan evaporator at 65 °C. The precipitate formed was then resuspended in distilled water. The sample is transferred to tared sample flasks and the quantity of the precipitate was measured by accurately weighing the concentrate. Usually the evaporation to dryness of the sample takes around 4 hours in a vacuum centrifuge at 65 °C.

### Example 2: Separation and identification of the extract compounds.

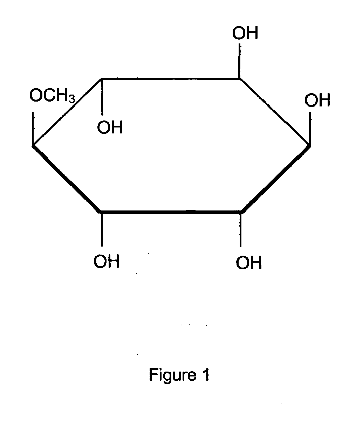

Out of all the algarrobo *(Prosopis* sp) trees collected, the White algarrobo *(Prosopis alba)* showed the best inhibition activity and the work was continued with such species and organ. The pods of the White algarrobo became the preferred source instead of the leaves, as the pods contain 10 times more inhibition activity than the leaves (data not shown).
- The sample was suspended in water and filtered, and injected in an HPLC Konik KNK 500 A Series, with an amino Variant column with filter. The mobile phase of the chromatography was acetonitrile-water (80-20%), where best separation of the peaks was obtained.
- Two clearly marked peaks were obtained at 10 min and 12 min, and a third more abundant peak at 25 min.
- The extraction of methanol showed a first peak (peak 1) which was higher relative to peak 2.
- Then the third most abundant peak was diluted, which was D-sucrose (common table sugar, data not shown) as confirmed by RMM.
- In general the various solvents showed the same type of pattern, with a variance of the relative proportion in each of the peaks. The inhibition activity concentrated in peak 1. Peak 2 did not show activity at concentrations identical to peak 1. Peak 2 is possibly glucose.
- The ethanol-water extract was used to collect 15 milligrams of peak 1, which was used to perform the structure study in the NMR. The study was conducted in the University of Buenos Aires School of Exact Sciences, thanks to Dr. Gerardo Burton. The result of the study showed that peak 1 contained a compound called 3-O-methyl-chiro-inositol; also known as D-Pinitol (Figure 1).

### Example 3: Study of the inhibition capacity of the different extract compounds.

Out of the three peaks, sucrose showed the highest concentration. Sucrose is not described in the literature as an inhibitor of the germination. Indeed, it is used in plant tissue cultures as a source of carbon. However, due to its osmotic potential, at high concentrations it could become a germination inhibitor. Therefore, an experiment was conducted to assess the inhibition capacity of the aforementioned physiological process. Table 1 illustrates the results of the experiment.

**Table 1, Inhibition by sucrose.**

| Sucrose (mg/well) | Concentration % | Germination % |
|---|---|---|
| Control I. 0 | 0.0 | 100 |
| Control II. 0 | 0.0 | 100 |
| 10 | 16.7 | 79 |
| 20 | 33.3 | 71 |
| 30 | 50.0 | 57 |
| 40 | 66.7 | 0 |
| 50 | 83.3 | 0 |
| 75 | 125.0 | 0 |
| 100 | 166.7 | 0 |
| 200 | 333.3 | 0 |
| 300 | 500.0 | 0 |
| 400 | 666.7 | 0 |

The table shows the germination capacity of lettuce seeds in the presence of known quantities of sucrose.
- Only with a solution at 50% of sucrose, can the germination be reduced to 57%. In no case did the experiment samples reach such levels of sucrose concentration.
- Peak 1 showed the inhibition of the germination, while peak 2 did not (data not shown).
- No other peaks were observed in the chromatography at longer times or in other mobile phases used (data not shown).
- To obtain 15 milligrams of pure peak 1, several injections in HPLC were required from where such fraction was collected. Thus, it was possible to collect the sample for the NMR studies, but the method did not prove applicable for germination assays, given the large quantities required in these experiments and the analytical conditions under which the work was performed.
- The ethanol-water extract was then used to assay the inhibition caused by peak 1 in the germination of different species, with knowledge of the quantity of peak 1 in the quantity of extract used. This extract was preferred over the others as the ratio of peak 1 to the other peaks was the highest, and further knowing that peak 2 has no activity. The quantity of *sucrose* did not offer an important concentration to inhibit the germination, as it never exceeded 3%.
- In the mean inhibition in the lettuce seeds, peak 1 inhibited the germination in quantities as low as 0.015 mg/well.
- In order to check in a reliable manner that pinitol accounted for the result observed in the white algarrobo, this commercial product was developed. The results with pinitol and with the extract were exactly the same, both in the degree of inhibition as well as in the selectivity with the species.

### Example 4: Germination with different varieties of soybean.

Non-genetically modified soybean seeds (Non-GM soybean) were germinated in presence of known quantities of peak 1. The seeds were provided by INTA, from its Experimental Station in Paraná, Entre Ríos. The seeds were harvested in April 2007.

As illustrated in table 2, some soybean varieties attained germination values as high as in the control, or else higher at 50%, in presence of known quantities of inhibitor (0.50 mg/ml).

Other varieties failed to germinate in presence of the inhibitor, and others proved to be defective seeds, as the control showed a low germination percentage, and did not allow to assess the presence of the inhibitor.

**Table 2-A. Germination of Non-GM soybean( Not GM)**

| Concentration of D-pinitol (mg/ml) | | | | Soybean varieties |
|---|---|---|---|---|
| 0.25 | 0.50 | 1.25 | Control | |
| Germination % | | | | |
| 100 | 100 | 100 | 56 | Soybean 2 |
| 44 | 44 | 11 | 33 | Soybean 3 |
| 78 | 78 | 78 | 78 | Soybean 4 |
| 67 | 67 | 44 | 67 | Soybean 5 |
| 100 | 56 | 67 | 100 | Soybean 6 |
| 78 | 56 | 11 | 100 | Soybean 7 |
| 67 | 67 | 67 | 100 | Soybean 8 |
| 78 | 11 | 33 | 100 | Soybean 9 |
| 11 | 44 | 11 | 54 | Soybean 10 |
| 67 | 78 | 33 | 100 | Soybean 11 |
| 100 | 100 | 56 | 100 | Soybean 12 |
| 44 | 44 | 11 | 33 | Soybean 13 |
| 11 | 11 | 0 | 11 | Soybean 16 |
| 67 | 33 | 22 | 67 | Soybean 17 |
| 0 | 67 | 33 | 78 | Soybean 18 |
| 100 | 100 | 33 | 100 | Soybean 20 |
| 22 | 22 | 22 | 56 | Soybean 21 |
| 78 | 56 | 67 | 67 | Soybean 22 |
| 56 | 22 | 44 | 56 | Soybean 23 |
| 56 | 44 | 33 | 33 | Soybean 24 |
| 56 | 33 | 33 | 33 | Soybean 25 |
| 56 | 67 | 0 | 22 | Soybean 26 |
| 87 | 56 | 56 | 33 | Soybean 28 |
| 33 | 78 | 89 | 89 | Soybean 29 |
| 11 | 11 | 22 | 11 | Soybean 30 |
| 11 | 22 | 0 | 22 | Soybean 32 |
| 11 | 0 | 0 | 11 | Soybean 34 |
| 22 | 22 | 0 | 78 | Soybean 35 |
| 22 | 11 | 11 | 22 | Soybean 36 |
| 44 | 11 | 0 | 11 | Soybean 37 |
| 0 | 0 | 0 | 11 | Soybean 38 |
| 67 | 11 | 0 | 11 | Soybean 39 |
| 89 | 67 | 33 | 100 | Soybean 40 |
| 22 | 56 | 33 | 44 | Soybean 41 |
| 44 | 56 | 11 | 22 | Soybean 45 |
| 33 | 11 | 0 | 44 | Soybean 46 |

Out of the 46 varieties of soybean assayed, 10 did not germinate in the absence of D-Pinitol (control), these data were removed from the table above. The concentration of inhibitor refers to the quantity of peak 1 in the algarrobo extract (methanol-water).

GM and Non-GM soybean seeds were used and the result was the same; i.e. some varieties of soybean germinated in the presence of the inhibitor, while others did not.

The varieties of soybean described in Table 2-A were then assayed in the presence of pure D-pinitol, instead of the algarrobo extract. Table 2-B shows only the varieties that had significant values at a concentration of 75 mg/ml. The remaining varieties of such concentration showed germination values below 40%. Further assays were performed with these varieties increasing the concentration of pinitol to 90 mg/ml, where varieties 18 and 29 still showed acceptable levels of germination. Even more so, variety 18 appears to have found a saturation level for the 75 mg/ml concentration, since a higher concentration did not reduce the inhibition level, which remained at 40%.

**Table 2-B**

| | Germination % after 96 hours. | | |
|---|---|---|---|
| | Control in water | D-Pinitol. | |
| Soybean variety | | 75 mg/ml | 90 mg/ml |
| 18 | 100 | 40 | 40 |
| 20 | 100 | 20 | 0 |
| 22 | 100 | 10 | 10 |
| 29 | 100 | 80 | 40 |

### Example 5: Germination percentage of weeds and other species.

Table 3 shows different soybean species that germinated in quantities of peak 1 identical to those mentioned in Table 2.

**Table 3. Germination of weeds and other species.**

| Concentration of D-pinitol (mg/ml) | | | | Species |
|---|---|---|---|---|
| 0,25 | 0,50 | 1,25 | Control | |
| Germination % | | | | |
| 50 | 60 | 20 | 80 | Ipomea |
| 20 | 0 | 0 | 90 | Red Clover |
| 20 | 0 | 0 | 90 | Alfalfa Key |
| 80 | 70 | 50 | 100 | Persian Clover |
| 47 | 1 | 1 | 100 | Melilotus |
| 20 | 1 | 1 | 40 | Lotus |
| 27 | 1 | 1 | 55 | Parsley |
| 67 | 33 | 33 | 67 | Bean Pods |
| 55 | 77 | 55 | 67 | Corn Maize |
| 0 | 0 | 0 | 54 | Arugula |
| 0 | 0 | 0 | 44 | Beetroot |
| 0 | 0 | 0 | 100 | Alfalfa *cautiva* |
| 93 | 40 | 7 | 100 | Lotus Tennis |
| 13 | 7 | 0 | 80 | Alfalfa *Huella* |
| 0 | 0 | 0 | 40 | White Clover |

Table 3 shows the results of germinating different soybean seeds in the presence of peak 1. The species used included: Ipomea, *Ipomea sp.* Red Clover, *Triforium pratense.* Alfalfa Key, *Medicago sativa var*. *Key.* Persian Clover, *Trifolium pratense.* Melilotus, *Melilotus oficinalis.* Lotus, *Lotus macalatus.* Parsley, *Petroselinum crispum.* Bean, *Phaseolus vulgaris. Corn, Zea mayz.* Arugula, *Eruca sativa.* Beetroot, *Beta vulgaris.* Alfalfa *cautiva, Medicago sativa var. cautiva.* Lotus Tennis, *Lotus tennis.* Alfalfa key, *Medicago sativa var. Huella.* White Clover, *Trifolium repens.*

### Example 6: Germination percentage of Portulaca using a concentration of D-Pinitol of 90 mg/ml, instead of algarrobo extract.

The germination assay of Portulaca was performed in the presence of a concentration of D-pinitol of 90 mg/ml. At the end of the experiment 90% germination was achieved for the control and 0% germination for the seeds exposed to D-Pinitol.

### Example 7: Germination percentage of weeds and other species using a concentration of D-Pinitol of 75 mg/ml

**Table 4. Germination of weeds and other species in the presence of D-Pinitol.**

| Concentration of D-pinitol (mg/ml) | | Species |
|---|---|---|
| 75 | Control | |
| Germination % | | |
| 40 | 80 | Ipomea |
| 0 | 90 | Red Clover |
| 15 | 80 | Alfalfa Key |
| 10 | 100 | Persian Clover |
| 15 | 85 | Melilotus |
| 0 | 100 | Lotus |
| 10 | 15 | Parsley |
| 10 | 70 | Bean Pod |
| 100 | 100 | Corn Maize |
| 35 | 100 | Arugula |
| 0 | 95 | Beetroot |
| 0 | 100 | Alfalfa *Cautiva* |
| 0 | 100 | Lotus tennis |
| 5 | 90 | Alfalfa huella |
| 30 | 85 | White Clover |

### Example 8: Germination percentage (after 96 hours) of different corn and wheat varieties using a D-Pinitol concentration of 90 mg/ml

**Table 5**

| D-pinitol concentration (mg/ml) | | Species |
|---|---|---|
| 90 | Control | |
| Germination % | | |
| | | **Corn variety** |
| 0 | 80 | LT 622 |
| 70 | 100 | LT 610 |
| 0 | 70 | Poper 42 |
| 10 | 70 | LT 651 |
| 70 | 100 | LT 625 |
| 60 | 100 | Zambruni |
| 0 | 90 | LT 619 |
| 30 | 90 | LT 620 |
| 70 | 100 | LT 616 |
| 50 | 100 | AP 2501 |

| | | **Wheat variety** |
|---|---|---|
| 90 | 100 | Klein Capricornio |
| 50 | 100 | Cronox |
| 80 | 100 | Klein Zorro |
| 80 | 100 | Klein Chaja |
| 100 | 100 | Onix |
| 100 | 100 | Klein Escorpion |

## Claims

1. A method for controlling weeds in vegetable crops, the method being designed for the purpose of obtaining and applying a composition to crops which are generally resistant to the action of such composition, and further **comprising** the steps of:
i) preparing a composition containing at least D-pinitol in an agronomically suitable medium, with a concentration of D-pinitol ranging between 0.20 mg/ml and 2300 mg/ml.
ii) applying the composition obtained to vegetable crops which are generally resistant to D-pinitol by means of devices selected from spraying devices and solid-particle applicator devices in the form of granules, pellets, tablets, or powder, as appropriate.

2. A method according to claim 1, **wherein** such agronomically suitable excipients are selected from a group comprising pH regulators, detergents, preservatives and stabilizers.

3. A method according to claims 1 or 2, **wherein** the composition is applied on the field with a concentration of D-pinitol ranging between 0.2 and 120 mg/ml.

4. A method according to claims 1 or 2, **wherein** the composition is applied on the field with a concentration of D-pinitol ranging between 30 mg/ml and 2000 mg/ml.

5. A method according to claims 1 or 2, **wherein** the composition is applied on the field with a concentration of D-pinitol ranging between 80 mg/ml and 2000 mg/ml.

6. A method according to any of the claims above, **wherein** the composition is applied to plant species selected from the group comprising terrestrial or aquatic plant species.

7. A method according to claim 6, **wherein** the plant species are selected from the group comprising *Glycine max* (soybean), *Zea mays* (corn), *Triticum sp.* (Wheat), *Phaseolus sp., Vigna sp., Crotalaria sp., Cajanus ap., Canavalia sp., Stizolobium sp., Tephrosia sp. Dolichos sp., Cassia sp., Lotononis sp., Lab lab., Indigofera sp. Melilotus sp., Arachis sp., Aeschynomene sp., Centrosema sp., Macroptilium sp. Prosopis sp., Pueraria sp. Medicago sp., Lotus sp,* Gossypium sp. *(cotton), Solanum sp.* (potato), *Helianthus sp.* (sunflower), *Sorgohum sp.* (sorghum), *Brassica sp.* (rape), *Beta sp.* (tomato), *Dianthus sp.* (carnation) and *Rosa sp.* (Rose).

8. A method according to any of claims 1 to 7, **wherein** the composition containing D-pinitol is applied by means of a form selected among slow-release granules or powder substances, liquid, liquid concentrate, tablets and pellets.

9. A method according to any of claims 1 to 8, **wherein** the slow-release granulate composition containing D-Pinitol is applied at the same time as the seed is sown.

10. A method according to claims 8 or 9, **wherein** the composition to be applied is obtained by dissolving slow-release granules, tablets or pellets containing solid D-pinitol in a liquid solution.

## Patentansprüche

1. Verfahren zur Kontrolle von Unkräutern in Pflanzenkulturen, wobei das Verfahren zu dem Zweck entworfen ist, eine Zusammensetzung zu erhalten und sie auf Kulturen anzuwenden, die im Allgemeinen gegenüber der Wirkung einer solchen Zusammensetzung resistent sind und das ferner die folgenden Schritte **umfasst:**
i) Herstellen einer Zusammensetzung, die mindestens D-Pinitol in einem agronomisch geeigneten Medium enthält, mit einer Konzentration an D-Pinitol, die im Bereich von 0,20 mg/ml und 2300 mg/ml liegt;
ii) Anwenden der erhaltenen Zusammensetzung auf Pflanzenkulturen, die im Allgemeinen resistent gegenüber D-Pinitol sind, mittels Vorrichtungen ausgewählt aus Sprühvorrichtungen und Verabreichungsvorrichtungen für Festteilchen in Form von Granula, Pellets, Tabletten oder Pulver, soweit angemessen.

2. Verfahren nach Anspruch 1, **wobei** die agronomisch geeigneten Trägerstoffe ausgewählt sind aus einer Gruppe umfassend pH-Regulatoren, Detergenzien, Konservierungsstoffe und Stabilisatoren.

3. Verfahren nach Anspruch 1 oder 2, **wobei** die Zusammensetzung auf das Feld in einer Konzentration von D-Pinitol aufgebracht wird, die zwischen 0,2 und 120 mg/ml liegt.

4. Verfahren nach Anspruch 1 oder 2, **wobei** die Zusammensetzung auf das Feld in einer Konzentration von D-Pinitol aufgebracht wird, die zwischen 30 mg/l und 2000 mg/ml liegt.

5. Verfahren nach Anspruch 1 oder 2, **wobei** die Zusammensetzung auf das Feld in einer Konzentration von D-Pinitol aufgebracht wird, die zwischen 80 mg/l und 2000 mg/ml liegt.

6. Verfahren nach einem der obigen Ansprüche, **wobei** die Zusammensetzung bei Pflanzenarten angewandt wird, die ausgewählt sind aus der Gruppe terrestrischer oder aquatischer Pflanzenarten.

7. Verfahren nach Anspruch 6, **wobei** die Pflanzenarten ausgewählt sind aus der Gruppe umfassend *Glycine max* (Sojabohne), *Zea mays* (Mais), *Triticum sp.* (Weizen), *Phaseolus sp., Vigna sp., Crotalaria sp., Cajanus sp., Canavalia sp., Stizolobium sp., Tephrosia sp., Dolichos sp., Cassia sp., Lotononis sp., Lab lab., Indigofera sp., Melilotus sp., Arachis sp., Aeschynomene sp., Centrosema sp., Macroptilium sp., Prosopis sp., Pueraria sp., Medicago sp., Lotus sp., Gossypium sp.* (Baumwolle), *Solanum sp.* (Kartoffel), *Helianthus sp.* (Sonnenblume), *Sorghum sp.* (Sorghum), *Brassica sp.* (Raps), *Beta sp.* (Rübe), *Dianthus sp.* (Nelke) und *Rosa sp.* (Rose).

8. Verfahren nach einem der Ansprüche 1 bis 7, **wobei** die D-Pinitol enthaltende Zusammensetzung mittels einer Formulierung angewendet wird, die ausgewählt ist aus langsam freisetzenden Granula, Flüssigkeit, Flüssigkonzentrat, Tabletten und Pellets.

9. Verfahren nach einem der Ansprüche 1 bis 8, **wobei** die langsam freisetzende D-Pinitol enthaltende Granulatzusammensetzung zur gleichen Zeit verabreicht wird, wenn die Saat gesät wird.

10. Verfahren nach Anspruch 8 oder 9, **wobei** die anzuwendende Zusammensetzung erhalten wird durch Lösen von langsam freisetzenden Granula, Tabletten oder Pellets, die festes D-Pinitol enthalten, in einer flüssigen Lösung.

## Revendications

1. Procédé de lutte contre les mauvaises herbes dans des cultures maraîchères, le procédé étant conçu afin d'obtenir et d'appliquer une composition sur des cultures qui sont généralement résistantes à l'action d'une telle composition, et comprenant en outre les étapes suivantes :
i) la préparation d'une composition contenant au moins du D-pinitol dans un milieu approprié en agronomie, avec une concentration en D-pinitol située entre 0,20 mg/ml et 2300 mg/ml,
ii) l'application de la composition obtenue sur des cultures maraîchères qui sont généralement résistantes au D-pinitol au moyen de dispositifs choisis parmi les dispositifs de pulvérisation et les dispositifs d'application de particules solides sous la forme de granulés, de pellets, de comprimés ou d'une poudre, selon le cas.

2. Procédé selon la revendication 1, dans lequel de tels excipients appropriés en agronomie sont choisis dans un groupe comprenant les régulateurs de pH, les détergents, les conservateurs et les stabilisateurs.

3. Procédé selon la revendication 1 ou 2, dans lequel la composition est appliquée sur le champ avec une concentration en D-pinitol située entre 0,2 mg/ml et 120 mg/ml.

4. Procédé selon la revendication 1 ou 2, dans lequel la composition est appliquée sur le champ avec une concentration en D-pinitol située entre 30 mg/ml et 2000 mg/ml.

5. Procédé selon la revendication 1 ou 2, dans lequel la composition est appliquée sur le champ avec une concentration en D-pinitol située entre 80 mg/ml et 2000 mg/ml.

6. Procédé selon l'une quelconque des revendications précédentes, dans lequel la composition est appliquée sur des espèces végétales choisies dans le groupe comprenant les espèces végétales terrestres ou aquatiques.

7. Procédé selon la revendication 6, dans lequel les espèces végétales sont choisies dans le groupe comprenant *Glycine max* (soja), *Zea mays* (maïs), *Triticum sp.* (blé), *Phaseolus sp., Vigna sp., Crotalaria sp., Cajanus sp., Canavalia sp., Stizolobium sp., Tephrosia sp. Dolichos sp., Cassia sp., Lotononis sp., Lab lab., Indigofera sp. Melilotus sp., Arachis sp., Aeschynomene sp., Centrosema sp., Macroptilium sp. Prosopis sp., Pueraria sp. Medicago sp., Lotus sp., Gossypium sp.* (coton), *Solanum sp.* (patate), *Helianthus sp.* (tournesol), *Sorgohum sp.* (sorgho), *Brassica sp.* (colza), *Beta* sp. (tomate), *Dianthus sp.* (oeillet) et *Rosa sp.* (rose).

8. Procédé selon l'une quelconque des revendications 1 à 7, dans lequel la composition contenant du D-pinitol est appliquée au moyen d'une forme choisie parmi les granulés à libération lente ou les substances pulvérulentes, un liquide, un concentré liquide, les comprimés et les pellets.

9. Procédé selon l'une quelconque des revendications 1 à 8, dans lequel la composition de granulés à libération lente contenant du D-pinitol est appliquée en même temps que la graine est semée.

10. Procédé selon la revendication 8 ou 9, dans lequel la composition à appliquer est obtenue par la dissolution de granulés à libération lente, de comprimés ou de pellets contenant du D-pinitol solide dans une solution liquide.
